# NEUE EUROPÄISCHE PATENTSCHRIFT

(11) **EP 3 021 466 B2**
(45) Veröffentlichungstag und Bekanntmachung des Hinweises auf die Entscheidung über den Einspruch: **15.07.2026**
(45) Hinweis auf die Patenterteilung: 05.07.2023
(21) Anmeldenummer: 15003212.6
(22) Anmeldetag: 10.11.2015
(51) Int. Cl.: H02K 15/12, H02K 15/02, F16B 11/00

(54) **VERFAHREN ZUR HERSTELLUNG VON LAMELLENPAKETEN UND ANLAGE ZUR DURCHFÜHRUNG DES VERFAHRENS**
METHOD FOR THE PRODUCTION OF LAMELLA PACKETS AND INSTALLATION FOR CARRYING OUT THE PROCESS
PROCEDE DE FABRICATION DE PAQUETS DE LAMELLES ET INSTALLATION D'EXECUTION DU PROCEDE

(30) Priorität: 17.11.2014 DE 102014017149
(43) Veröffentlichungstag der Anmeldung: 18.05.2016
(73) Patentinhaber: Feintool International Holding AG, 3250 Lyss (CH)
(72) Erfinder: Böker, Björn, 73733 Esslingen (DE)
(74) Vertreter: Kohl, Karl-Heinz

(56) Entgegenhaltungen:
- EP-A2- 1 833 145
- EP-A2- 1 833 145
- WO-A2-2013/135378
- DE-A1- 102006 016 584
- DE-A1- 102011 010 825
- DE-T5- 112007 002 887
- DE-U1- 202004 003 575
- JP-A- 2005 269 732
- US-A- 4 842 895
- US-B1- 6 772 503

## Beschreibung

Die Erfindung betrifft ein Verfahren zur Herstellung von Lamellenpaketen für einen Rotor oder einen Stator nach dem Oberbegriff des Anspruches 1 sowie eine Anlage zur Durchführung eines solchen Verfahrens nach dem Oberbegriff des Anspruches 11.

Es ist bekannt, Lamellen, die beispielsweise aus einem Endlosband gestanzt werden, zu Lamellenpaketen zu stapeln, aus denen Rotoren und Statoren für Motoren und Generatoren hergestellt werden. Innerhalb des Lamellenpaketes sind die Lamellen teilweise mittels eines Klebemittels miteinander verbunden, das punktförmig auf die Lamellen aufgebracht wird. Da das Klebemittel üblicherweise mittels Piezoventilen auf die Lamellen aufgetragen wird, ist eine entsprechende Zahl von Piezoventilen erforderlich. Dadurch wird der Auftragkopf mit solchen Piezoventilen jedoch aufwändig und entsprechend teuer.

Weiterhin ist bekannt, dass die Isolationslacke, beispielsweise EB5350s, bezüglich ihrer Klebefähigkeit keine reproduzierbaren chemischen und physikalische Eigenschaften aufweisen und/oder die Isolationsoberfläche im Nanometerbereich verschmutzt bzw. verunreinigt sind. Dadurch kann keine ausreichende Adhäsion und/oder eine Adhäsion in der benötigten Zeit zwischen Klebstoff und Isolationsoberfläche aufbaut werden.

Aus der WO 2013/135378 A2 ist es bekannt, Lamellenpakete aus aufeinander sitzenden Lamellen herzustellen, die durch ein Klebemittel miteinander verbunden sind. Zum Auftrag des Klebemittels wird ein Auftragkopf eingesetzt.

Der Erfindung liegt die Aufgabe zugrunde, das gattungsgemäße Verfahren und die gattungsgemäße Anlage so auszubilden, dass ein reproduzierbarer fester Verbund zwischen den Lamellen innerhalb des Lamellenpaketes in einfacher Weise erreicht werden kann, ohne dass eine aufwändige Gestaltung des Auftragkopfes erforderlich ist.

Diese Aufgabe wird beim gattungsgemäßen Verfahren erfindungsgemäß mit den kennzeichnenden Merkmalen des Anspruches 1 und bei der gattungsgemäßen Anlage mit den kennzeichnenden Merkmalen des Anspruches 11 gelöst.

Beim erfindungsgemäßen Verfahren sind die Lamellen ringförmig oder nicht ringförmig als Ringabschnitte ausgebildet. Sie können aus einem Blechband oder einer Blechplatte gestanzt oder auf andere Weise aus ihnen hergestellt werden, insbesondere mittels Laserschneiden. Die ringförmigen Lamellen werden beim Klebstoffauftrag so im Bereich des Auftragkopfes positioniert, dass sich die Lamelle im Auftragbereich des Auftragkopfes befindet. Während des Klebemittelauftrages wird die ringförmige Lamelle um ihre Achse gedreht. Dadurch gelangt der gesamte Oberseitenbereich der Lamelle in den Auftragbereich des Auftragkopfes. Es ist somit bei konstruktiv einfacher Gestaltung des Auftragkopfes möglich, die gesamte Oberseite der ringförmigen Lamelle vollflächig mit dem Klebemittel zu versehen. Es ist nur eine geringe Zahl von Auftragdüsen im Auftragkopf erforderlich, um die ringförmige Lamelle über ihren Umfang mit dem Klebstoff zu versehen. Je nach Anforderung kann auch nur ein Teil der Oberfläche der ringförmigen Lamelle mit dem Klebemittel versehen werden.

Der Klebemittelauftrag kann auch dadurch erfolgen, dass die ringförmige Lamelle ortsfest bleibt, während sich der Auftragkopf oder ein beweglicher Teil des Auftragkopfs längs des Umfangs der ringförmigen Lamelle bewegt, so dass das Klebemittel über den gesamten Umfangsbereich oder nur über einen Teil des Umfangsbereiches der Lamelle aufgetragen werden kann.

Schließlich ist es auch möglich, sowohl die Lamelle als auch den Auftragkopf während des Klebemittelauftrages um die Achse der Lamelle zu drehen bzw. zu bewegen.

Bei nicht ringförmiger Ausbildung werden die als Ringabschnitte ausgebildeten Lamellen mittels einer um ihre zentrale Achse drehbaren Matrize um diese Achse in den Auftragbereich des Auftragkopfes transportiert. Hierbei wird die nicht ringförmige Lamelle um die zentrale Achse über einen definierten produktabhängigen Drehwinkel bewegt.

Vorteilhaft werden die Lamelle und/oder der Auftragkopf gleichmäßig gedreht bzw. bewegt. Das Klebemittel lässt sich dadurch über den Umfang der ringförmigen Lamelle einfach auf die gewünschten Lamellenbereiche aufbringen. Zudem ist die Steuerung zur Bewegung der Lamelle und/oder des Auftragkopfes entsprechend einfach.

Die Lamellen werden über einen definierten Drehwinkel um ihre Achse gedreht, so dass die ringförmige Oberfläche der Lamellen über ihren gesamten Umfang mit dem Klebemittel versehen werden kann.

Vorteilhaft wird auch der Auftragkopf oder der bewegliche Teil des Auftragkopfes über einen definierten Drehwinkel um die Achse der ringförmigen Lamelle bewegt, damit das Klebemittel über den gesamten Umfang der Lamelle auf deren Oberseite aufgebracht werden kann.

Vorteilhaft wird die ringförmige Oberseite und Unterseite der Lamelle vor dem Klebemittelauftrag gereinigt und/oder aktiviert. Zur Reinigung können bekannte Strahlverfahren, wie das Druckluft-, CO₂-Schnee- und/oder Plasmastrahlen oder wässrige Reinigungen, eingesetzt werden, mit denen an der Oberfläche der Lamellen befindliche anorganische und/ oder organische Schmutzteilchen zuverlässig entfernt werden.

Zur Aktivierung der Oberfläche der ringförmigen Lamellen kann vorzugsweise das bekannte Atmosphärendruckplasmaverfahren eingesetzt werden. Hierzu wird die Isolationsschicht des Elektroblechs durch chemisch/physikalische Reaktionen im Nanobereich behandelt bzw. modifiziert und gewährleistet dadurch eine exakt definierte und hocheffiziente Oberfläche.

Durch die Reinigung und/oder Aktivierung wird erreicht, dass das Klebemittel zuverlässig auf der Oberfläche der ringförmigen Lamelle haftet.

Das Klebemittel kann schon vor dem Ausstanzen der Lamelle aufgebracht werden. Das Werkzeug zum Ausstanzen ist in diesem Falle so gestaltet, dass es nicht mit dem Klebemittel in Berührung kommt.

Es ist aber auch möglich, das Klebemittel erst nach dem Ausstanzen der ringförmigen Lamelle aufzubringen. Dann ist ein spezielles Stanzwerkzeug nicht erforderlich.

Das erfindungsgemäße Verfahren eignet sich auch für Lamellen, die nicht ringförmig als Ringabschnitte ausgebildet sind, die zu Teilringpaketen gestapelt werden. Diese Teilringpakete werden dann anschließend zu den ringförmigen Paketen zusammengefügt. Bei diesem Verfahren wird die Lamelle in einer ersten Position gestanzt. Sie wird anschließend in die zweite Position transportiert, die sich im Bereich neben dem Blechband befindet. In dieser zweiten Position wird auf die Oberseite der Lamelle das Klebemittel aufgebracht. Anschließend wird diese Lamelle in die dritte Position transportiert, die sich unterhalb des Blechbandes befindet. Aus ihm wird in Höhe dieser dritten Position die nächste Lamelle gestanzt, die in dieser Position anschließend auf die mit dem Klebemittel versehene Lamelle unter Druck aufgelegt wird. Auf diese Weise entsteht ein Teilpaket, bei dem die aufeinander liegenden Lamellen durch das Klebemittel miteinander verbunden sind. Das Teilpaket wird in eine vierte Position transportiert, die im Bereich neben dem Blechband liegt und in der auf das Teilpaket das Klebemittel aufgebracht wird. Anschließend wird dieses Teilpaket zurück in die erste Position transportiert, die sich wiederum im Bereich unterhalb des Blechbandes befindet. In der ersten Position wird die nächste Lamelle gestanzt und unter Druck auf das darunter liegende Teilpaket gedrückt, das an seiner Oberseite mit dem in der vierten Position aufgetragenen Klebemittel versehen ist. Auf diese Weise werden nacheinander die Lamellen gestanzt und zum Lamellenpaket gestapelt, bis dieses die gewünschte Höhe aufweist.

Das Klebemittel wird vorteilhaft berührungslos auf die Lamellen aufgebracht.

Selbstverständlich ist es möglich, das Klebemittel auch berührend auf die Lamellen aufzutragen.

Das Klebemittel kann flächig, aber auch linien- oder punktförmig aufgebracht werden. Hierzu ist es lediglich notwendig, dass die entsprechende Auftragdüse entsprechend lange oder kurz geöffnet und dass die Auftragsdüsen in einem produktspezifischen Verhältnis zur Vorschubgeschwindigkeit über eine Steuerung, beispielsweise eine SPS-Steuerung geregelt, gesteuert und überwacht werden.

Mit den erfindungsgemäßen Verfahren ist es insbesondere möglich, das Klebemittel in einer solchen Menge aufzubringen, dass die Fläche des Klebemittels auf der Oberseite der Lamelle wenigstens etwa 50 % der gesamten Fläche der Lamellenoberseite beträgt. Dieser große Anteil an Klebemittel führt dazu, dass die Lamellen innerhalb des Lamellenpaketes sicher miteinander verbunden sind. Dieser große Flächenanteil an Klebemittel bedingt keine aufwändige Konstruktion des Auftragkopfes.

Vorteilhaft ist der Flächenanteil des Klebemittels größer als etwa 60 % der gesamten Fläche der Lamellenoberseite.

Die Lamellen können beispielhaft T-förmig ausgebildet sein.

Bei diesem Verfahren werden die Lamellen vorteilhaft mittels einer drehbaren Matrize zwischen den verschiedenen Positionen transportiert.

Vorteilhaft ist es, wenn die Lamellen um jeweils 90° zwischen den einzelnen Positionen transportiert werden.

Mit dem erfindungsgemäßen Verfahren können insbesondere dünne Werkstücke, die üblicherweise eine Dicke von weniger als 1 mm haben, zuverlässig verarbeitet werden. Es können insbesondere Lamellen unterschiedlicher Qualität, Dicke, Eigenschaften und Beschichtung verarbeitet werden. Innerhalb des Lamellenpaketes können sogar Lamellen unterschiedlicher Qualität, Dicke, Eigenschaften und Beschichtung verwendet werden.

Bei der erfindungsgemäßen Anlage ist dem Stanzwerkzeug, in dem die Lamellen gestanzt werden, wenigstens eine Station nachgeschaltet, in der die Lamellen gereinigt und/oder aktiviert und mit Klebemittel versehen werden. Hierbei ist es möglich, dass die Anlage für jede Operation eine eigene Station aufweist. Es ist aber auch möglich, dass in einer einzigen Station alle drei Prozesse, nämlich Reinigen, Aktivieren und Klebemittelauftrag, durchgeführt werden. Da diese Station nicht im Stanzwerkzeug, sondern außerhalb von ihm angeordnet ist, bleibt das Stanzwerkzeug frei von eventuellen Verunreinigungen, die beim Reinigen und/oder Aktivieren und/oder Klebemittelauftrag auftreten können.

Bei einer vorteilhaften Ausbildung ist die Anlage so ausgebildet, dass die Lamellen nicht innerhalb des Stanzwerkzeuges, sondern außerhalb von ihm zu Lamellenpaketen gestapelt werden.

Bei einer vorteilhaften Ausbildung ist die Station zum Auftrag des Klebemittels und zur Reinigung und/oder zur Aktivierung mit wenigstens einer Auftragvorrichtung versehen, die im Bereich einer Dreheinheit angeordnet ist. Auf ihr liegen die Lamellen auf, die mit der Dreheinheit um ihre Achse gedreht werden. Hierbei sind die Lamellen bevorzugt ringförmig ausgebildet.

Sie werden mittels der Dreheinheit um ihre Achse unterhalb der Auftragvorrichtung gedreht. Dadurch kommt die Lamelle über ihren Umfang in den Arbeitsbereich der Auftragvorrichtung, die die entsprechenden Arbeiten ausführen kann.

Bei einer anderen vorteilhaften Ausführungsform stehen die Lamellen während der Reinigung und/oder Aktivierung und des Klebemittelauftrages still. In diesem Falle ist die Auftragvorrichtung so gestaltet, dass sie längs der Lamellen bewegt wird. Auch in diesem Falle ist es möglich, die Lamelle über ihre gesamte Länge zu reinigen und/oder zu aktivieren und/oder mit Klebemittel zu versehen.

Die Erfindung wird anhand einiger in den Zeichnungen dargestellter Ausführungsformen näher erläutert. Es zeigen
- Fig. 1: in schematischer Darstellung eine erfindungsgemäße Nutenstanzanlage in Kreisanordnung,
- Fig. 2: in schematischer Darstellung eine zweite Ausführungsform einer erfindungsgemäßen Nutenstanzanlage in Kreisform,
- Fig. 3: in schematischer Darstellung eine dritte Ausführungsform einer erfindungsgemäßen Nutenstanzanlage in Kreisform,
- Fig. 4: in schematischer Darstellung eine weitere Ausführungsform einer erfindungsgemäßen Nutenstanzanlage in Linearanordnung,
- Fig. 5: in schematischer Darstellung eine weitere Ausführungsform einer erfindungsgemäßen Nutenstanzanlage in Linearanordnung,
- Fig. 6: in schematischer Darstellung eine weitere Ausführungsform einer erfindungsgemäßen Nutenstanzanlage in Linearanordnung,
- Fig. 7: in schematischer Darstellung eine weitere Ausführungsform einer erfindungsgemäßen Schnellläuferpresse in Linearanordnung,
- Fig. 8: in schematischer Darstellung eine zweite Ausführungsform einer erfindungsgemäßen Schnellläuferpresse in Linearanordnung,
- Fig. 9: in schematischer Darstellung eine dritte Ausführungsform einer erfindungsgemäßen Schnellläuferpresse in Linearanordnung,
- Fig. 10: in schematischer Darstellung eine erfindungsgemäße Einrichtung zum Aufbringen eines Klebstoffes mit Reinigungs- und Aktivierungsstationen,
- Fig. 11: den Klebstoffauftrag mit einem rotierenden Blech,
- Fig. 12: den Klebstoffauftrag mittels einer rotierenden Vorrichtung,
- Fig. 13: den Klebstoffauftrag mittels einer Vorrichtung mit einer Rotationseinheit,
- Fig. 14: in schematischer Drauf- und Seitenansicht eine Ausführungsform einer erfindungsgemäßen Einheit zum Auftragen von Klebstoff auf ein rotierendes Blech,
- Fig. 15: in schematischer Drauf- und Seitenansicht eine Ausführungsform einer erfindungsgemäßen Einheit zum Auftragen von Klebstoff mittels einer Vorrichtung mit einer Rotationseinheit,
- Fig. 16 und 17: in schematischer Darstellung jeweils eine weitere Ausführungsform einer erfindungsgemäßen Einheit zum Auftragen von Klebstoff.

Im Folgenden wird anhand verschiedener Ausführungsbeispiele dargelegt, wie innerhalb eines Lamellenpaketes aufeinanderliegende Lamellen mittels wenigstens eines Klebstoffes fest miteinander verbunden werden können. Die eingesetzten Anlagen und Vorrichtungen sind hierbei so gestaltet, dass die einzelnen Lamellen einen verhältnismäßig großen Klebflächenanteil aufweisen, der beispielsweise größer als etwa 60 % der gesamten Lamellenfläche beträgt. Das Klebemittel kann hierbei punktförmig, linienförmig oder auch flächig auf die jeweilige Lamelle aufgetragen sein. Die zu diesem großflächigen Klebstoffauftrag eingesetzten Vorrichtungen zeichnen sich dabei durch eine konstruktiv sehr einfache und raumsparende Ausbildung aus.

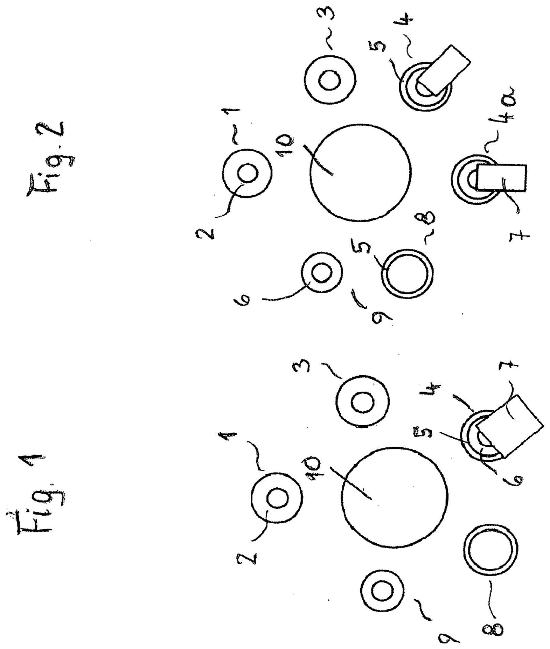

Fig. 1 zeigt in schematischer Darstellung beispielhaft eine Nutenstanzanlage in einer Kreisanordnung. Diese Anlage hat eine erste Station 1, in der Lamellen 2 in Form von Rondenblechen bevorratet werden. Die Lamellen 2 gelangen über ein Transportsystem 10 zu einer zweiten Station 3, in welcher die Lamellen 2 für die weitere Bearbeitung ausgerichtet werden. Über das Transportsystem gelangen die ausgerichteten Lamellen 2 in eine dritte Station 4. Hier werden aus dem Rondenblech 2 ein ringförmiges Statorblech 5 und ein ringförmiges Rotorblech 6 in bekannter Weise gestanzt. Anschließend werden mit einer Vorrichtung 7 die Bleche 5, 6 gereinigt und das Klebemittel aufgetragen.

Mit dem Transportsystem wird das äußere Statorblech 5 einer vierten Station 8 zugeführt, in der die Statorbleche 5 zu einem Statorpaket gestapelt werden. Über das Klebemittel werden die aufeinanderliegenden Statorbleche 5 zusammengehalten. Die einzelnen ringförmigen Statorbleche 5 werden vor dem Stapeln ausgerichtet, so dass das entstehende Statorpaket über seinen Umfang gleiche axiale Höhe hat.

Die ringförmigen Rotorbleche 6 werden mit dem Transportsystem 10 einer fünften Station 9 zugeführt, in der die ringförmigen Rotorbleche 6 zu einem Rotorpaket gestapelt werden. Vor dem Aufeinandersetzen werden die Rotorbleche 6 ausgerichtet, so dass das Rotorpaket über seinen Umfang gleiche axiale Dicke hat. Über das in der Station 4 aufgebrachte Klebemittel werden die aufeinandersitzenden Rotorbleche zuverlässig zusammengehalten.

Bei diesem Ausführungsbeispiel sind die Stationen 1, 3, 4, 8, 9 auf einem Kreis um das Transportsystem 10 angeordnet.

Die Nutenstanzanlage gemäß Fig. 2 ist ebenfalls in Kreisanordnung ausgebildet, d.h. die einzelnen Stationen liegen auf einem Kreis um das zentral angeordnete Transportsystem. Die Nutenstanzanlage ist im Wesentlichen gleich ausgebildet wie das vorige Ausführungsbeispiel. In der Station 1 werden die Rondenbleche 2 auf Vorrat gehalten. Von hier aus werden sie mittels des Transportsystems 10 der zweiten Station 3 zugeführt, in der die Rondenbleche 2 ausgerichtet werden. In der dritten Station 4 werden aus den Rondenblechen 2 die ringförmigen Statorbleche 5 und die ringförmigen Rotorbleche 6 gestanzt.

Mit dem Transportsystem 10 werden die Bleche 5, 6 einer vierten Station 4a zugeführt, in welcher sie gereinigt werden und in der auf sie das Klebemittel aufgebracht wird.

In der nachfolgenden fünften Station 8 werden die Statorbleche 5 in der beschriebenen Weise ausgerichtet und zum Statorpaket zusammengefügt. In der nachfolgenden sechsten Station 9 werden die ringförmigen Rotorbleche 6 in der beschriebenen Weise ausgerichtet und zum Rotorpaket zusammengesetzt.

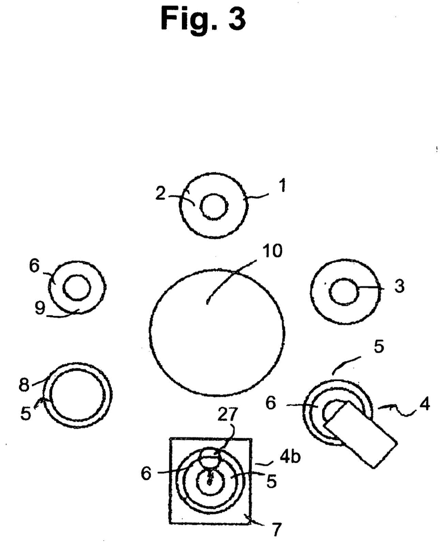

Die Nutenstanzanlage gemäß Fig. 3 ist ebenfalls in Kreisanordnung ausgebildet, d.h. die einzelnen Stationen liegen auf einem Kreis um das zentral angeordnete Transportsystem 10. Die Nutenstanzanlage ist im Wesentlichen gleich ausgebildet wie die vorigen Ausführungsbeispiele. In der Station 1 werden die Rondenbleche 2 auf Vorrat gehalten. Von hier aus werden sie mittels des Transportsystems 10 der zweiten Station 3 zugeführt, in der die Rondenbleche 2 ausgerichtet werden. In der dritten Station 4 werden aus den Rondenblechen 2 die ringförmigen Statorbleche 5 und die ringförmigen Rotorbleche 6 gestanzt.

Mit dem Transportsystem 10 werden die Bleche 5, 6 einer vierten Station 4b zugeführt, in welcher sie gereinigt werden und in der auf sie das Klebemittel aufgebracht wird. In diesem Beispiel werden die Reinigungs- und/oder Aktivierungsdüsen sowie Klebstoffauftragsventile durch eine bewegliche Vorrichtungseinheit 27, welche sich in einer feststehenden Vorrichtungseinheit 7 befindet, um die Bleche 5,6 bewegt.

In der nachfolgenden fünften Station 8 werden die Statorbleche 5 in der beschriebenen Weise ausgerichtet und zum Statorpaket zusammengefügt. In der nachfolgenden sechsten Station 9 werden die ringförmigen Rotorbleche 6 in der beschriebenen Weise ausgerichtet und zum Rotorpaket zusammengesetzt.

Im Unterschied zur ersten Ausführungsform erfolgt das Stanzen der beiden Bleche 5, 6 sowie die Reinigung und der Klebstoffauftrag in den beiden Stationen 4, 4a (Fig. 2) oder 4, 4b (Fig. 3). Bei der Ausführungsform gemäß Fig. 1 erfolgte der Stanzvorgang, die Reinigung sowie der Klebstoffauftrag in nur einer einzigen Station 4.

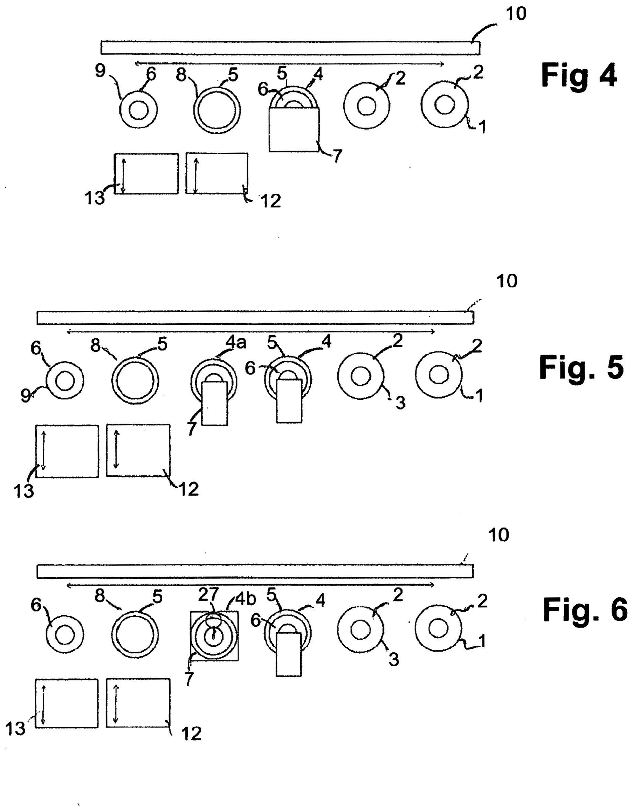

Bei der Ausführungsform gemäß Fig. 4 befinden sich die einzelnen Stationen der Nutenstanzanlage in einer Linearanordnung, d.h. sie sind längs eines linearen Transportsystems 10 nebeneinander angeordnet. Auch bei dieser Ausführungsform werden die ringförmigen Rondenbleche 2 als Ausgangsmaterial für die Statorbleche 5 und die Rotorbleche 6 eingesetzt. Sie werden entweder aus Blechen mittels Lasern herausgetrennt oder aus Endlosblechen in bekannter Weise gestanzt. Dies gilt auch für die bei den Nutenstanzanlagen gemäß den Fig. 1, 2 und 3 eingesetzten Rondenbleche 2. Da das Heraustrennen der Rondenbleche aus Blechen mittels Laser oder Stanzen aus Endlosblechen bekannt ist, wird dies nicht näher erläutert.

In der ersten Station 1 werden die Rondenbleche 2 wieder auf Vorrat gehalten. Mittels des Transportsystems 10 werden die Rondenbleche 2 der zweiten Station 3 zugeführt, in der die Rondenbleche 2 ausgerichtet werden. Anschließend gelangen die ausgerichteten Rondenbleche 2 mit Hilfe des Transportsystems 10 zur dritten Station 4, in der ähnlich wie bei der Ausführungsform gemäß Fig. 1 aus den Rondenblechen 2 die ringförmigen Statorbleche 5 und die ringförmigen Rotorbleche 6 gestanzt werden. Beide Bleche 5, 6 werden anschließend mit der Vorrichtung 7 gereinigt und das Klebemittel aufgetragen.

In der nachfolgenden Station 8 werden die ringförmigen Statorbleche 5 zum Statorpaket gestapelt. Hierfür ist eine Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche vor dem Stapeln ausgerichtet werden, weist das Statorpaket über seinen Umfang gleiche axiale Höhe auf.

Die ringförmigen Rotorbleche 6 werden mittels des Transportsystems 10 der Station 9 zugeführt, in der die Rotorbleche 6 mittels einer Fügeeinheit 13 zu einem Rotorpaket gestapelt werden. Bevor die Rotorbleche 6 aufeinandergesetzt werden, werden sie so ausgerichtet, dass das entstehende Rotorpaket über seinen Umfang gleiche axiale Höhe hat. Über das Klebemittel werden die aufeinanderliegenden Rotorbleche 6 innerhalb des Rotorpaketes fest miteinander verbunden.

Die Nutenstanzanlage gemäß Fig. 5 ist ebenfalls linear ausgebildet und hat das lineare Transportsystem 10, längs dem die einzelnen Stationen in einer Linearanordnung nebeneinander liegen. In der ersten Station 1 werden die Rondenbleche 2 wieder auf Vorrat gehalten. Mittels des Transportsystems 10 werden die Rondenbleche 2 der zweiten Station 3 zugeführt, in der die Rondenbleche 2 ausgerichtet werden. Anschließend gelangen die ausgerichteten Rondenbleche 2 mit Hilfe des Transportsystems 10 zur dritten Station 4, in der ähnlich wie bei der Ausführungsform gemäß Fig. 2 aus den Rondenblechen 2 die ringförmigen Statorbleche 5 und die ringförmigen Rotorbleche 6 gestanzt werden. Anschließend werden die gestanzten Bleche 5, 6 mittels des Transportsystems 10 der Station 4a zugeführt, in der die Bleche 5, 6 gereinigt sowie aktiviert werden. Anschließend erfolgt der Klebmittelauftrag.

In der nachfolgenden Station 8 werden die ringförmigen Statorbleche 5 zum Statorpaket gestapelt. Hierfür ist die Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche 5 vor dem Stapeln ausgerichtet werden, weist das Statorpaket über seinen Umfang gleiche axiale Höhe auf.

Die ringförmigen Rotorbleche 6 werden mittels des Transportsystems 10 der Station 9 zugeführt, in der die Rotorbleche 6 mittels der Fügeeinheit 13 zu einem Rotorpaket gestapelt werden. Bevor die Rotorbleche 6 aufeinandergesetzt werden, werden sie so ausgerichtet, dass das entstehende Rotorpaket über seinen Umfang gleiche axiale Höhe hat. Über das Klebemittel werden die aufeinanderliegenden Rotorbleche 6 innerhalb des Rotorpaketes fest miteinander verbunden.

Die Nutenstanzanlage gemäß Fig. 6 ist ebenfalls linear ausgebildet, bei der die einzelnen Stationen längs des linearen Transportsystems 10 nebeneinander angeordnet sind. In der ersten Station 1 werden die Rondenbleche 2 wieder auf Vorrat gehalten. Mittels des Transportsystems 10 werden die Rondenbleche 2 der zweiten Station 3 zugeführt, in der die Rondenbleche 2 ausgerichtet werden. Anschließend gelangen die ausgerichteten Rondenbleche 2 mit Hilfe des Transportsystems 10 zur dritten Station 4, in der ähnlich wie bei der Ausführungsform gemäß Fig. 3 aus den Rondenblechen 2 die ringförmigen Statorbleche 5 und die ringförmigen Rotorbleche 6 gestanzt werden. Anschließend werden die gestanzten Bleche mittels des Transportsystems 10 der Station 4b zugeführt, in der diese Bleche 5, 6 gereinigt sowie aktiviert werden. Anschließend erfolgt der Klebmittelauftrag.

In der nachfolgenden Station 8 werden die ringförmigen Statorbleche 5 zum Statorpaket gestapelt. Hierfür ist die Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche 5 vor dem Stapeln ausgerichtet werden, weist das Statorpaket über seinen Umfang gleiche axiale Höhe auf.

Die ringförmigen Rotorbleche 6 werden mittels des Transportsystems 10 der Station 9 zugeführt, in der die Rotorbleche 6 mittels der Fügeeinheit 13 zu einem Rotorpaket gestapelt werden. Bevor die Rotorbleche 6 aufeinandergesetzt werden, werden sie so ausgerichtet, dass das entstehende Rotorpaket über seinen Umfang gleiche axiale Höhe hat. Über das Klebemittel werden die aufeinanderliegenden Rotorbleche 6 innerhalb des Rotorpaketes fest miteinander verbunden.

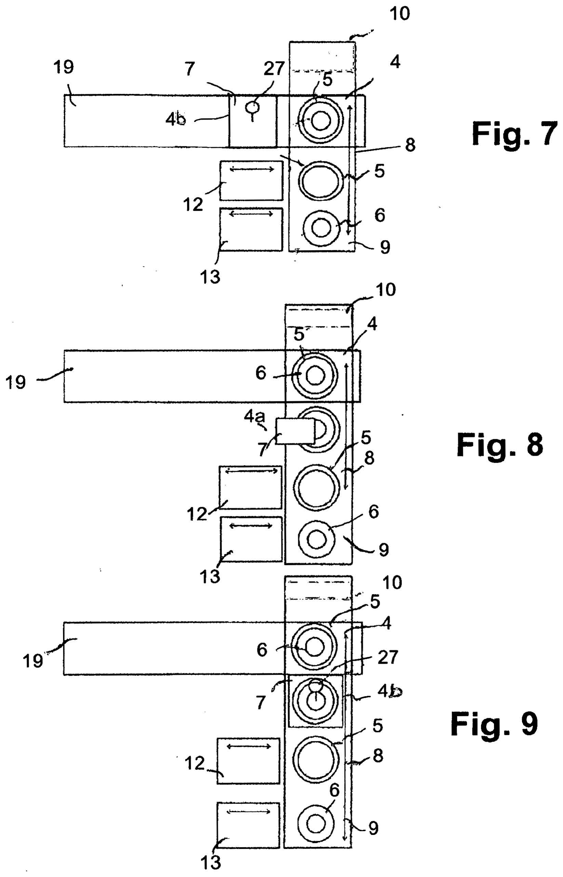

Fig. 7 zeigt in schematischer Darstellung beispielhaft ein Schnellläuferpressenkonzept innerhalb des Arbeitsraumes. Dieser Arbeitsraum hat eine erste Station 4b, in der das Elektroband 19 mittels der Auftragvorrichtung 7 in der Ausführungsvariante 4b gereinigt, aktiviert sowie der Klebstoff auf das Band 19 aufgebracht werden. In der nachfolgenden zweiten Station 4 werden die runden Bleche 5,6 aus dem Blech gestanzt. Der Stanzprozess wird nicht näher beschrieben, da dieser Prozess bekannt ist.

In der nachfolgenden Station 8 werden die ringförmigen Statorbleche 5 zum Statorpaket gestapelt. Hierfür ist die Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche vor dem Stapeln ausgerichtet werden, weist das Statorpaket über seinen Umfang gleiche axiale Höhe auf.

Die ringförmigen Rotorbleche 6 werden mittels des Transportsystems 10 der Station 9 zugeführt, in der die Rotorbleche 6 mittels der Fügeeinheit 13 zu einem Rotorpaket gestapelt werden. Bevor die Rotorbleche 6 aufeinandergesetzt werden, werden sie so ausgerichtet, dass das entstehende Rotorpaket über seinen Umfang gleiche axiale Höhe hat. Über das Klebemittel werden die aufeinanderliegenden Rotorbleche 6 innerhalb des Rotorpaketes fest miteinander verbunden.

Das Transportsystem 10 ist senkrecht zur Transportrichtung des Elektrobandes 19 angeordnet. Die Stationen 4, 8, 9 liegen längs des Transportsystems 10.

Die Schnellläuferpressenanlage gemäß Fig. 8 zeigt ebenfalls in schematischer Darstellung beispielhaft ein Schnellläuferpressenkonzept innerhalb des Arbeitsraumes. Dieser Arbeitsraum hat die erste Station 4 in welcher die Bleche 5, 6 aus dem Elektroband 19 gestanzt werden. In der zweiten Station 4a werden die Bleche 5, 6 mittels der Auftragvorrichtung 7 gereinigt, aktiviert sowie der Klebstoff auf die Bleche 5, 6 appliziert. In der nachfolgenden Station 8 werden die ringförmigen Statorbleche 5 zum Statorpaket gestapelt. Hierfür ist die Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche vor dem Stapeln ausgerichtet werden, weist das Statorpaket über seinen Umfang gleiche axiale Höhe auf.

In der nachfolgenden Station 9 werden die ringförmigen Rotorbleche 6 mittels der Fügeeinheit 13 zum Rotorpaket gestapelt. Sie werden vor dem Zusammensetzen ausgerichtet, damit das entstehende Rotorpaket über seinen Umfang gleiche axiale Höhe hat. Die aufeinanderliegenden Rotorbleche 6 sind durch das Klebemittel fest miteinander verbunden.

Die Stationen 4, 4a, 8, 9 liegen linear hintereinander, so dass die Bleche 5, 6 mittels des linearen Transportsystems 10 den Stationen zugeführt werden können. Das Elektroband 19 wird entsprechend der vorigen Ausführungsform senkrecht zur Transportrichtung des Transportsytems 10 zugeführt.

Die Schnellläuferpressenanlage gemäß Fig. 9 zeigt ebenfalls in schematischer Darstellung beispielhaft ein Schnellläuferpressenkonzept innerhalb des Arbeitsraumes. Dieser Arbeitsraum hat die erste Station 4 in welcher die Bleche 5, 6 aus dem Elektroband 19 gestanzt werden. In der nachfolgenden Station 4b werden die Bleche 5, 6 mittels der Auftragvorrichtung 7 gereinigt, aktiviert sowie der Klebstoff auf die Bleche 5, 6 appliziert. In der nachfolgenden Station 8 werden die ringförmigen Statorbleche 5 zum Statorpaket gestapelt. Hierfür ist die Fügeeinheit 12 vorgesehen, mit der die ringförmigen Statorbleche 5 ausgerichtet und zum Statorpaket gestapelt werden. Das Klebemittel sorgt dafür, dass die Statorbleche 5 innerhalb des Statorpaketes fest miteinander verbunden sind. Da die Statorbleche vor dem Stapeln ausgerichtet werden, weist das Statorpaket über seinen Umfang gleiche axiale Höhe auf.

Die ringförmigen Rotorbleche 6 werden mittels des Transportsystems 10 der Station 9 zugeführt, in der die Rotorbleche 6 mittels der Fügeeinheit 13 zu einem Rotorpaket gestapelt werden. Bevor die Rotorbleche 6 aufeinandergesetzt werden, werden sie so ausgerichtet, dass das entstehende Rotorpaket über seinen Umfang gleiche axiale Höhe hat. Über das Klebemittel werden die aufeinanderliegenden Rotorbleche 6 innerhalb des Rotorpaketes fest miteinander verbunden.

Auch bei diesem Ausführungsbeispiel liegen die Stationen 4, 4b, 8, 9 längs des linearen Transportsystems 10 hintereinander. Die Transportrichtung des Transportsystems 10 liegt senkrecht zur Transportrichtung des Elektrobandes 19.

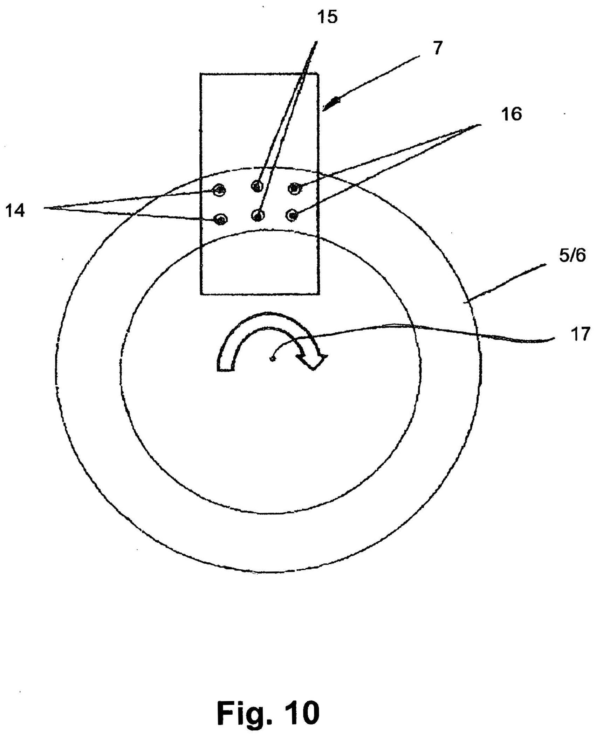

Fig. 10 zeigt eine Ausführungsform der Vorrichtung 7, mit der das Klebemittel auf das Statorblech 5 sowie auf das Rotorblech 6 aufgetragen werden kann. Diese Vorrichtung 7 wird bei der Ausführungsform gemäß Fig. 1 und 4 in der Station 4 und bei den Ausführungsformen nach den Fig. 2, 3, 5, 6,7,8 und 9 in der Station 4a bzw. 4b eingesetzt.

Die Vorrichtung 7 hat wenigstens eine Reinigungsdüse 14, die so angeordnet ist, dass das aus ihr austretende Reinigungsmedium auf die Oberseite des Statorbleches 5 bzw. des Rotorbleches 6 trifft. Im Ausführungsbeispiel sind zwei solcher Reinigungsdüsen vorgesehen, die mit Abstand nebeneinander angeordnet sind.

Weiter ist die Vorrichtung 7 mit wenigstens einer Aktivierungsdüse 15 versehen, aus der Atmosphärendruckplasma austritt. Im Ausführungsbeispiel sind zwei solcher Aktivierungsdüsen 15 vorgesehen, die gegen die Oberseite der Bleche 5, 6 gerichtet sind. Die beiden Aktivierungsdüsen 15 liegen ebenfalls mit Abstand nebeneinander sowie mit Abstand neben den Reinigungsdüsen 14.

Schließlich ist die Vorrichtung 7 mit wenigstens einer Auftragsdüse 16 versehen, über die das Klebemittel auf die Bleche 5, 6 aufgebracht wird. Im dargestellten Ausführungsbeispiel hat die Vorrichtung 7 zwei solcher Auftragdüsen 16, die mit Abstand nebeneinander angeordnet sind. Außerdem liegen die Auftragdüsen 16 mit Abstand zu den Aktivierungsdüsen 15.

Zur Reinigung, Aktivierung und zum Klebemittelauftrag wird das Blech 5, 6 unter der Vorrichtung 7 hindurch gedreht. Das Blech 5, 6 wird mit einer geeigneten Dreheinheit um die zentrale Achse 17 in Pfeilrichtung im Uhrzeigersinn gedreht. Die Düsen 14 bis 16 der Vorrichtung 7 sind so angeordnet, dass sie beim Drehen des Bleches 5, 6 stets das Medium in Richtung auf das Blech lenken. Die Vorrichtung 7 sowie die Dreheinheit für die Bleche 5, 6 sind so zueinander angeordnet, dass beim Drehen des Bleches 5, 6 die Düsen 14 bis 16 stets im Bereich der Bleche 5, 6 liegen. Die Düsen 14 bis 16 sind dementsprechend so an der Vorrichtung 7 vorgesehen, dass die aus ihnen austretenden Medien auf die drehenden Bleche 5, 6 über deren gesamten Umfang treffen. Im dargestellten Ausführungsbeispiel liegen die Düsen 14 bis 16 jeweils in einer Reihe neben- und übereinander, wobei die Düsen jeweils Abstand voneinander haben.

Die Anordnung der Düsen ist so getroffen, dass beim Drehen der Bleche 5, 6 zunächst das aus den Reinigungsdüsen 14 austretende Reinigungsmedium die Oberseite der Bleche 5, 6 reinigt. Als Reinigungsmedium kann beispielsweise CO₂₋Schneestrahlen eingesetzt werden.

Im Anschluss an die Reinigung erfolgt über die Düsen 15 eine weitere Reinigung sowie eine Aktivierung der Reinigung der Oberfläche der Bleche 5, 6, damit das nachfolgend aufzutragende Klebemittel sicher auf den Blechen 5, 6 haftet. Als Reinigungs- und Aktivierungsmedium kommt beispielsweise Atmosphärendruckplasma in Betracht. Die im Beispielsfall doppelte Reinigung sorgt dafür, dass mit der anschließenden Aktivierung die Oberfläche der Bleche 5, 6 einwandfrei gesäubert und so aktiviert ist, dass eine gute Haftung des Klebemittels auf den Blechen 5, 6 sichergestellt ist. Das aus den Düsen 16 austretende Klebemittel gelangt beim Drehen der Bleche 5, 6 somit auf eine gereinigte und aktivierte Oberfläche, auf der das Klebemittel zuverlässig haftet.

Da die Bleche 5, 6 unter der Vorrichtung 7 bzw. deren Düsen 14 bis 16 hindurch gedreht werden, reichen nur wenige Düsen aus, um die Bleche 5, 6 über den gesamten Umfang mit einer ausreichenden Menge an Klebemittel zu versehen. Es ist ohne weiteres möglich, die Klebemittel über eine solche Fläche aufzubringen, dass die Klebemittelfläche beispielsweise mehr als 60% der gesamten Oberfläche der Lamellen 5, 6 beträgt. Auf diese Weise werden innerhalb des jeweiligen Lamellenpaketes die Bleche 5, 6 mittels des Klebemittels sehr fest miteinander verbunden. Das Klebemittel kann beim Drehen der Bleche 5, 6 kontinuierlich aufgetragen werden, so dass eine vollflächige Benetzung der Oberfläche der Bleche 5, 6 mittels des Klebstoffes einfach möglich ist. Da beim Ausführungsbeispiel hierfür nur zwei Düsen 16 erforderlich sind, ist der technische Aufwand zum flächigen Aufbringen des Klebemittels gering. Es sind insbesondere nur zwei Ventile, vorzugsweise Piezoventile, erforderlich, mit denen das Klebemittel gezielt auf die Bleche 5, 6 aufgebracht werden kann.

Das Klebemittel muss nicht über den gesamten Umfang flächig auf die Bleche 5, 6 aufgetragen werden. Es ist durchaus möglich, den flächigen Klebemittelauftrag nur in einzelnen Abschnitten auf der Oberfläche der Bleche 5, 6 vorzusehen. Die zum Auftrag des Klebemittels vorgesehenen Ventile werden von einer entsprechenden Steuerung so angesteuert, dass der gewünschte Klebemittelauftrag erfolgt.

Die Düsen 16 können auch so gestaltet sein, dass das Klebemittel nicht flächig, sondern beispielsweise nur punkt- oder linienförmig auf die Oberseite der Bleche 5, 6 auftritt.

Die aus den Düsen 14 und 15 austretenden Medien zur Reinigung sowie zur Aktivierung der Unterseite und Oberseite der Bleche 5, 6 werden vorteilhaft über die gesamte Fläche der Unterseite und Oberseite der Bleche 5, 6 aufgebracht, so dass die gesamte Oberseite der Bleche 5, 6 für den anschließenden Klebemittelauftrag einwandfrei gereinigt und aktiviert ist.

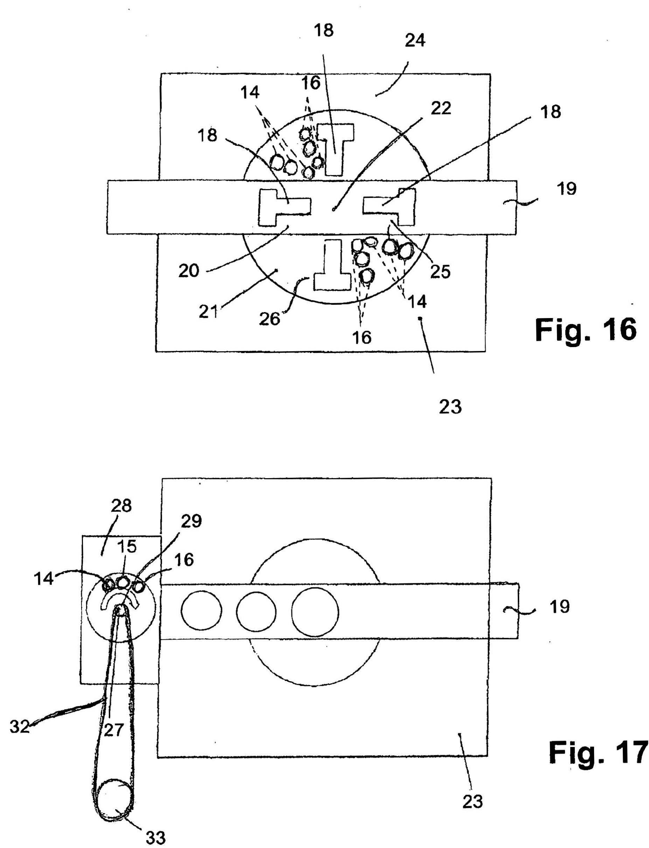

Fig. 16 zeigt die Möglichkeit, den großflächigen Klebemittelauftrag nicht nur bei ringförmigen Blechen, sondern auch bei T-förmigen Blechsegmenten 18 vorzusehen. Sie werden aus einem Blechband 19 in bekannter Weise gestanzt. In der ersten Station 20 wird das Segment 18 aus dem Blechband 19 gestanzt und liegt dann in einer drehbaren Matrize 21. Sie ist um eine zentrale Achse 22 drehbar, die sich, in Draufsicht auf das Blechband 19 gesehen, durch die halbe Breite des Blechbandes 19 erstreckt. Die drehbare Matrize 21 befindet sich in einem Werkzeugunterteil 23, das Bestandteil der Stanzpresse ist.

Nach dem Stanzvorgang wird die Matrize 21 im Ausführungsbeispiel im Uhrzeigersinn um 90° gedreht, wodurch das T-förmige Segment 18 in eine zweite Station 24 gelangt, die sich im Bereich neben dem Blechband 19 befindet. Die Blechoberflächen werden während der Drehung von den Positionen 20 auf 24 und/oder 25 auf 26 durch die integrierten Reinigungs- und/ oder Aktivierungsdüsen 14, 16 bewegt und dadurch gereinigt und modifiziert. Sie sind in Fig. 16 schematisch dargestellt. Das ausgestanzte und in der Matrize 21 liegende Segment 18 liegt somit außerhalb des Blechbandes 19. In der Station 24 wird das Klebemittel auf das Segment 18 aufgebracht. Hierfür kann wiederum die Vorrichtung 7 herangezogen werden, die in Fig. 9 der Übersichtlichkeit wegen nicht dargestellt ist. Da die Segmente T-Form haben, sind bei dieser Ausführungsform die entsprechenden Düsen so an der Vorrichtung vorgesehen, dass die Segmente 18 an ihrer Oberseite gereinigt, gegebenenfalls aktiviert und mit dem Klebemittel versehen werden können, das flächig, punktförmig oder linienförmig aufgebracht sein kann, wie anhand der Ausführungsform gemäß Fig. 10 beispielhaft erläutert worden ist.

Während in der Station 24 das Klebemittel auf das ausgestanzte Segment 18 aufgebracht wird, wird gleichzeitig in der ersten Station 20 das nächste Segment 18 aus dem Blechband 19 gestanzt.

Die Matrize 21 wird anschließend im Uhrzeigersinn wiederum um 90° um ihre Achse 22 gedreht. Dadurch gelangt dieses an seiner Oberseite mit Klebemittel versehene Segment wieder in den Bereich unterhalb des Blechbandes 19 in eine dritte Station 25. In ihr wird aus dem Blechband 19 das nächste Segment 18 gestanzt. Es liegt um 180° verdreht zum Segment 18, das in der ersten Station aus dem Blechband 19 gestanzt wird. Da die Matrize 21 jeweils um 90° gedreht wird, liegt das mit dem Klebemittel versehene Segment 18, in Draufsicht auf das Blechband 19 gesehen, deckungsgleich unterhalb des in der Station 25 ausgestanzten Segmentes 18. Es gelangt dadurch in der Matrize 21 auf das mit dem Klebemittel versehene Segment 18.

Nunmehr wird die Matrize 21 erneut im Uhrzeigersinn um 90° gedreht, wodurch die beiden aufeinanderliegenden Segmente 18, die durch das Klebemittel miteinander verbunden sind, in den Bereich der vierten Station 26 gelangen. Die beiden aufeinanderliegenden Segmente 18 liegen in diesem Falle um 180° verdreht in Bezug auf die Lage der Segmente in der gegenüberliegenden Station 24. In der Station 26 befinden sich die Segmente 18 wiederum im Bereich neben dem Blechband 19. In der Station 26 wird auf das obere Segment 18 wiederum das Klebemittel aufgebracht, beispielsweise voll- oder teilflächig, in Linienform oder in Punktform.

In dieser letzten Station 26 werden die Segmente 18 zum Lamellenpaket gestapelt. Hierbei werden in der beschriebenen Weise jeweils stets zwei aufeinanderliegende und durch das Klebemittel miteinander verbundene Segmente auf das in der Station 26 schon gebildete Lamellenpaket gelegt. Auf diese Weise entsteht in der Station 26 das Segment- bzw. Lamellenpaket, in dem die Segmente 18 fest mittels des Klebemittels miteinander verbunden sind.

Bei der Anlage nach Fig. 16 finden an allen vier Stationen die beschriebenen Operationen gleichzeitig statt. In den beiden Stationen 24, 26, die auf einander gegenüberliegenden Seiten des Blechbandes 19 liegen, liegen die das Klebemittel ausbringenden Vorrichtungen jeweils oberhalb der Segmente 18. Dadurch ergibt sich eine sehr kompakte Bauweise der Anlage im Vergleich zu herkömmlichen Anlagen, bei denen sich die Klebemittel/Auftragseinheit im Bereich vor dem jeweiligen Werkzeug befindet.

Fig. 17 zeigt die Möglichkeit, das Klebemittel im Werkzeug mittels eines rotierenden Elementes 27 innerhalb einer Auftragvorrichtung 28 auf die ringförmigen Bleche 5, 6 aufzubringen. Diese Auftragvorrichtung 28 befindet sich neben dem Werkzeugunterteil 23. Die Bleche werden in bekannter Weise aus dem Blechband 19 gestanzt. Um das Klebemittel auf das Elektroblechband aufzubringen sowie das vorherige Reinigen und Aktivieren zu gewährleisten, wird mit Hilfe des rotierenden Elementes 27 das Klebemittel auf das darunter befindliche Elektroband aufgebracht. Das Element 27 rotiert hierbei um die Drehachse 29, die, in Draufsicht auf das Blechband 19 gesehen, in halber Breite des Blechbandes und senkrecht zu ihm verläuft. Die ringförmigen Bleche 5, 6 werden in bekannter Weise aus dem Blechband 19 gestanzt und paketiert. Die Auftragvorrichtung 28 hat, ähnlich wie dies anhand der Vorrichtung gemäß Fig. 10 erläutert worden ist, wenigstens eine Auftragdüse 16, aus der das Klebemittel während der Rotation des Elementes 27 austritt. Die Düse 16 wird über die Steuerung so betätigt, dass das Klebemittel vollflächig, teilflächig, linienförmig, punktförmig und dergleichen auf die Oberseite des ringförmigen Bleches aufgetragen wird. Im Unterschied zur Vorrichtung nach Fig. 10 wird bei der Vorrichtung 28 das Element 27 umlaufend bzw. rotierend angetrieben, während die ringförmigen Bleche 5, 6 ortsfest stehen. Der bewegliche Vorrichtungsteil 27 kann vorzugsweise über einen Keilriemen 32 durch einen angesteuerten Motor 33 angetrieben werden.

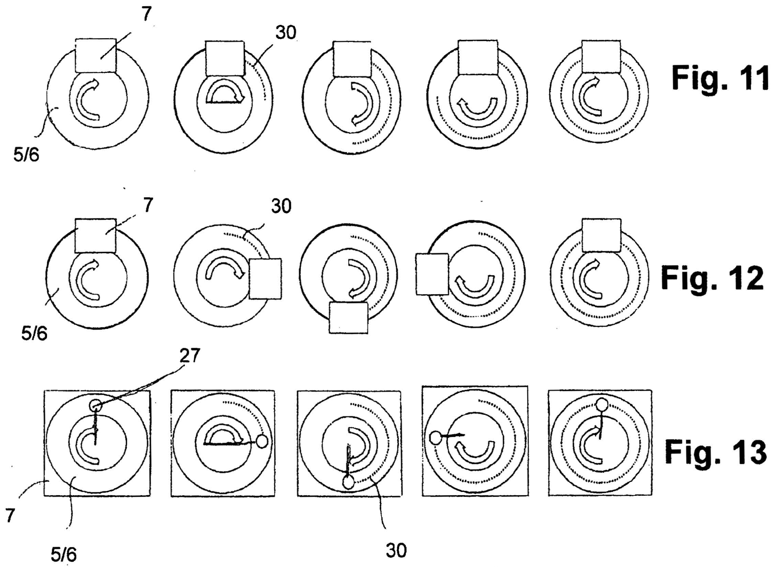

Anhand der Fig. 11 bis 12 wird der unterschiedliche Klebemittelauftrag erläutert.

Bei der Verfahrensweise gemäß Fig. 11 rotieren die ringförmigen Bleche 5, 6 unterhalb innerhalb der Vorrichtung 7, wie anhand der Fig. 10 erläutert worden ist. Der Klebemittelauftrag ist durch eine gepunktete Linie 30 symbolisiert. Die gepunktete Linie 30 ist nicht als linienförmiger Klebemittelauftrag zu verstehen, sondern soll verdeutlichen, dass das Klebemittel durch eine 360°-Drehung des Bleches 5, 6 aufgetragen wird. Dieser Klebemittelauftrag kann vollflächig, teilflächig, linienförmig, punktförmig und dergleichen sein. Dabei können die verschiedenen Arten des Klebemittelauftrages auf der Oberseite des Bleches 5, 6 auch in Kombination auftreten. So ist beispielsweise denkbar, einen teilflächigen Klebeauftrag in Abständen längs des Umfanges des Bleches 5, 6 vorzusehen und diese Teilflächen durch ein linienförmig aufgebrachtes Klebemittel miteinander zu verbinden. Auf diese Weise kann der Klebemittelauftrag auf die jeweiligen Anforderungen sehr einfach abgestimmt werden.

Fig. 12 zeigt die Möglichkeit, nicht das ringförmige Blech 5, 6, sondern stattdessen die Vorrichtung 7 längs des Umfanges des Bleches 5, 6 zu bewegen. Hierbei wird das Klebemittel über den Umfang des jeweiligen Bleches 5, 6 aufgetragen, was durch die punktierte Linie 30 veranschaulicht ist. Wie schon zur Fig. 11 ausgeführt, bedeutet die punktierte Linie 30 nicht, dass das Klebemittel linienförmig aufgetragen wird. Das Klebemittel wird, wie anhand der verschiedenen Ausführungsbeispiele erläutert, je nach Anwendungsfall vollflächig, teilflächig, linienförmig oder punktförmig oder auch in Kombination der unterschiedlichen Klebemittelaufträge auf die Oberseite der ringförmigen Bleche 5, 6 aufgebracht.

Fig. 13 schließlich zeigt den Ablauf des Klebemittelauftrages, wenn die Auftragvorrichtung 28 gemäß Fig. 3, 6, 7 und 9 eingesetzt wird. Hierbei steht das ringförmige Blech 5, 6 sowie das Elektroband 19 vorzugsweise still, während das rotierende Element 27 eine bis zu 360°-Drehung ausführt. Hierbei wird das Klebemittel über den Umfang des ringförmigen Bleches 5, 6 aufgetragen. Der Klebemittelauftrag ist wiederum durch die gepunktete Linie 30 dargestellt. Der Klebemittelauftrag kann vollflächig, teilflächig, linienförmig, punktförmig oder auch in Kombination dieser verschiedenen Auftragetechniken erfolgen. Das rotierende Element 27 kann, wie beispielhaft anhand von Fig. 10 erläutert worden ist, die Düsen 14 bis 16 aufweisen, um die ringförmigen Bleche 5, 6 zu reinigen, ggf. zu aktivieren und um das Klebemittel aufzubringen. Die Düsen sind ventilgesteuert, wobei die Ventile an die Steuerung angeschlossen sind, mit der die Ventile in der gewünschten Weise betätigt werden können.

Je nach radialer Breite der ringförmigen Bleche 5, 6 kann auch jeweils nur eine Düse 14, 15, 16 vorgesehen sein. Ebenso ist es möglich, auch mehr als zwei Reinigungsdüsen 14, Aktivierungsdüsen 15 und Auftragdüsen 16 zu verwenden. Auch ist es möglich, dass die verschiedenen Düsen 14, 15, 16 in unterschiedlicher Zahl vorgesehen sind. Die verschiedenen Düsen 14 bis 16 werden durch die Steuerung unabhängig voneinander betätigt. Vorteilhaft werden auch, wenn von jeder Düsenart zwei oder auch mehr Düsen vorgesehen sind, bevorzugt die Düsen derselben Art unabhängig voneinander von der Steuerung betätigt. Dadurch ist es möglich, gezielt Bereiche auf der Oberseite der ringförmigen Bleche 5, 6 zu reinigen und/oder zu aktivieren und/oder mit dem Klebemittel zu versehen.

Bei den verschiedenen Ausführungsbeispielen wird das jeweilige Blechpaket in der Matrize 21 zusammengefügt. Diese Matrize hat in bekannter Weise eine Bremse, die auf das Paket eine Bremskraft ausübt. Sie ist so groß, dass beim Aufdrücken des jeweils letzten Bleches 5, 6 bzw. letzten Segmentes 18 auf den schon gebildeten Teil des Paketes eine sichere Verklebung der darunter liegenden Bleche 5, 6, 18 gewährleistet. Hierzu werden die Blechteile 5, 6, 18 von einem Stempel auf die schon gestapelten Blechteile gedrückt. Die Bremse kann beispielsweise durch Teilringe gebildet sein, deren Innendurchmesser geringfügig kleiner ist als der Außendurchmesser der gestanzten Bleche 5, 6. Werden die T-förmigen Segmente 18 gestapelt, dann wird der Aufnahmeraum für diese Segmente so ausgebildet, dass seine Außenabmessungen ebenfalls geringfügig kleiner sind als die Außenabmessungen der T-förmigen Segmente 18, wodurch ebenfalls das jeweils gebildete Segmentpaket abgebremst wird.

Wenn die gewünschte Pakethöhe erreicht ist, wird die Zufuhr des Klebemittels unterbrochen, d. h. das Ventil der jeweiligen Auftragdüsen 16 geschlossen, so dass auf das jeweilige ringförmige Blech 5, 6 bzw. das Segment 18 kein Klebemittel aufgetragen wird. Darum haften diese Blechteile 5, 6, 18 nicht am vorhergehenden oder, je nach Ausbildung der Anlage, am nachfolgenden Blech. Auf diese Weise wird die gewünschte Pakethöhe bestimmt.

Bei den ringförmigen Blechen 5, 6 erfolgt in der Station 8 (Fig. 1 bis 4) sowie in der Station 9 bei der Ausführungsform gemäß Fig. 3 ein Ausrichtvorgang der ringförmigen Bleche 5, 6. Hierbei werden die ringförmigen Bleche 5, 6 um ihre Längsachse so gedreht, dass das in der Matrize gebildete Paket über seinen Umfang konstante Höhe hat. Für diesen Ausrichtvorgang wird die Matrize mit der Bremse beispielsweise mittels eines Rad-Riemen-Antriebes um ihre Längsachse gedreht, wodurch das in der Matrize befindliche Paket um den entsprechenden Winkel gedreht wird. Die Drehung erfolgt, bevor der nächste ringförmige Blechteil 5, 6 auf das Teilpaket in der Bremse in der Matrize gedrückt wird. Da die Verbindung zwischen den aufeinander liegenden Blechteilen 5, 6 lediglich über das Klebemittel erfolgt, kann der Drehwinkel der Matrize optimal an den Einsatzfall des herzustellenden Blechpaketes angepasst werden. Hierbei ist jeder Drehwinkel möglich, da keine physischen Beschränkungen vorliegen, wie die Blechteile zusammenpassen.

Bei der Ausführungsform gemäß Fig. 16 kann die Dicke des Teilpaketes bzw. des Gesamtpaketes aus den Segmenten 18 in den beiderseits des Blechbandes 19 liegenden Stationen 24, 26 gemessen werden. Dadurch ist eine sehr genaue Pakethöhenbestimmung möglich, weil in diesen Stationen unmittelbar die Höhe des jeweils gebildeten Teilpaketes erfasst werden kann. Während bei den bekannten Verfahren zur indirekten Bestimmung der Pakethöhe die Banddicke oder die Zahl der im Teilpaket befindlichen Segmente erfasst wird, was zu einer nur ungenauen Pakethöhenmessung führt, wird bei der Ausführungsform gemäß Fig. 16 die jeweilige Pakethöhe unmittelbar (direkt) gemessen. Dies führt zu einer sehr genauen Bestimmung der Pakethöhe.

Da der Klebstoffanteil auf der Oberseite der Blechteile 5, 6, 18 wesentlich größer ist als die halbe Oberseitenfläche dieser Blechteile, werden die im Paket aufeinander liegenden Blechteile 5, 6 einwandfrei fest miteinander verbunden. Dadurch können diese Pakete auch bei Motoren bzw. Generatoren eingesetzt werden, die mit hohen Drehzahlen arbeiten.

In den beschriebenen und dargestellten Ausführungsbeispielen sind die Statorbleche 5 sowie die Rotorbleche 6 aus einem einstückigen Ring gebildet. Es ist aber auch möglich, die ringförmigen Statorbleche bzw. Rotorbleche 6 aus einzelnen Segmenten zusammenzusetzen. In diesem Falle werden diese einzelnen Segmente für sich gestanzt und zu Paketen gestapelt, die ihrerseits dann zum ringförmigen Statorpaket bzw. Rotorpaket zusammengefügt werden.

Bei den Ausführungsbeispielen gemäß den Fig. 1 bis 5 wird das Klebemittel aufgetragen, solange sich die ringförmigen Blechteile 5, 6 oder die Vorrichtung 7 um die gemeinsame Drehachse drehen, wie dies beispielhaft in den Fig. 11 bis 13 veranschaulicht ist.

Zum Ausbringen des Klebemittels kann jedes Ventilsystem verwendet werden, mit dem sich das Klebemittel auf die Blechteile 5, 6, 18 auftragen lässt. Vorteilhaft wird ein Ventilsystem eingesetzt, das auf Piezotechnik basiert. Mit Piezoventilen kann ein präziser Klebemittelauftrag gewährleistet werden.

Das Klebemittel kann berührungslos, aber auch berührend auf die Oberseite des jeweiligen Blechteils 5, 6, 18 aufgebracht werden.

Bei der bevorzugten Ausführungsform sind die unterschiedlichen Düsen 14 bis 16 an einer gemeinsamen Vorrichtung 7 vorgesehen (Fig. 10). Dadurch ergibt sich eine besonders einfache und kompakte Gestaltung dieser Vorrichtung 7. Es ist darüber hinaus möglich, beispielsweise die Auftragdüsen 16 an einer gesonderten Vorrichtung vorzusehen, die räumlich getrennt von den Düsen 14 und 15 an der Anlage angeordnet ist. Dann wird zuverlässig verhindert, dass durch das Reinigungsmedium und/oder Aktivierungsmedium der Klebemittelauftrag gestört wird. So ist es beispielsweise möglich, eine solche getrennte, lediglich die wenigstens eine Auftragdüse 16 aufweisende Vorrichtung beispielsweise unter 90° oder 180° zur nur noch die Düsen 14, 15 enthaltenden Vorrichtung anzuordnen. Die ringförmigen Blechteile 5, 6 werden dann so gedreht, dass über den Umfang dieser Bleche 5, 6 der gewünschte Klebemittelauftrag in der beabsichtigten Weise vorgenommen wird.

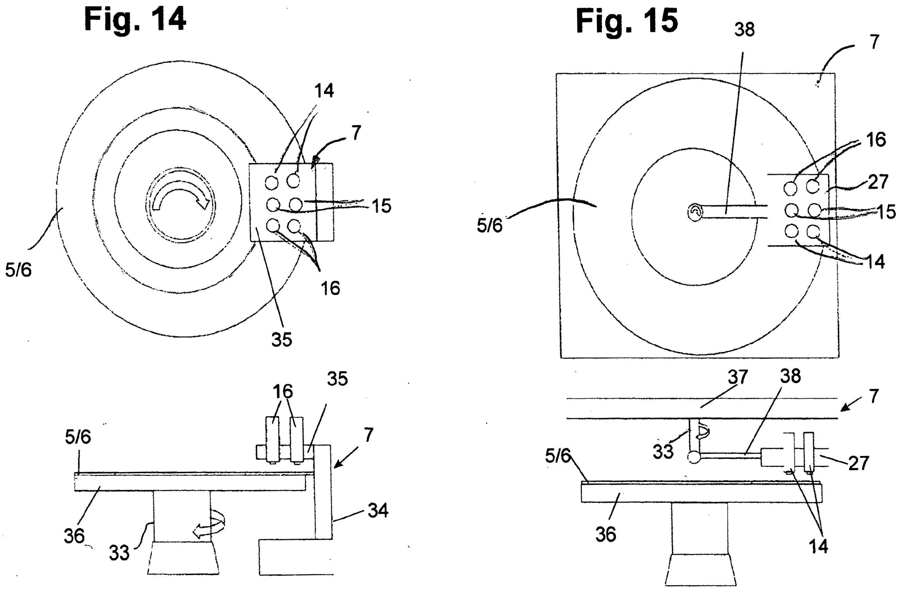

Fig. 14 zeigt beispielhaft eine solche gesonderte Vorrichtung 7. Sie hat die Reinigungsdüsen 14, die Aktivierungsdüsen 15 und die Auftragdüsen 16, die jeweils paarweise vorhanden sind. Die Ausbildung dieser Vorrichtung 7 entspricht der Ausbildung, wie sie anhand der Fig. 10 beispielhaft erläutert worden ist. Die Düsen sind jeweils paarweise in Reihen neben- und hintereinander angeordnet. Die Vorrichtung 7 hat ein Gestell 34, von dem ein Arm 35 quer absteht, an dem die Düsen 14 bis 16 angeordnet sind.

Die Düsen 14 bis 16 sind nach unten in Richtung auf die Bleche 5, 6 gerichtet, die mittels der Antriebseinheit 33 um eine vertikale Achse drehbar sind. Die Bleche 5, 6 liegen auf einem Rundtisch 36 auf, der mit der Antriebseinheit 33 um seine Achse drehend angetrieben wird. Die Düsen 14 bis 16 sind so angeordnet, dass das Klebemittel beim Drehen der Blechteile 5, 6 über deren Umfang aufgetragen werden kann.

Es ist vorteilhaft möglich, den Abstand zwischen den Düsen 14 bis 16 und den Blechen 5, 6 einstellbar auszubilden. Dies ist möglich, in dem beispielsweise die Düsen 14 bis 16 selbst relativ zum Arm 35 oder der Arm 35 mit den Düsen 14 bis 16 verstellt wird.

Fig. 15 zeigt schematisch ein Ausführungsbeispiel, bei dem nicht die ringförmigen Bleche 5, 6, sondern die Vorrichtung 7 um eine vertikale Achse gedreht werden. Die Vorrichtung 7 hat eine mit Abstand oberhalb des Rundtisches 36 liegende Trageinrichtung 37, von der zentral die Antriebseinheit 33 in Richtung auf den Rundtisch 36 absteht. Die Antriebseinheit 33 trägt einen Arm 38, der radial von der Antriebseinheit 33 absteht und am freien Ende das rotierende Element 27 trägt. An ihm sind die Düsen 14 bis 16 vorgesehen. Mit der Antriebseinheit 33 wird das Element 27 so umlaufend bewegt, dass die auf dem Rundtisch 36 liegenden ringförmigen Bleche 5, 6 in der beschriebenen Weise gereinigt, aktiviert und mit Klebemittel versehen werden können. Auch bei dieser Ausführungsform ist es vorteilhaft, wenn der Abstand zwischen den Düsen 14 bis 16 und den Blechen 5, 6 eingestellt werden kann, entweder durch Verstellung der Düsen oder des Elementes 27.

## Patentansprüche

1. Verfahren zur Herstellung von Lamellenpaketen für einen Rotor oder Stator, bei dem auf Lamellen (5, 6, 18) mit wenigstens einem Auftragkopf (7) mindestens ein Klebemittel aufgebracht und die mit dem Klebemittel versehenen Lamellen (5, 6, 18) zum Lamellenpaket gestapelt werden, **dadurch gekennzeichnet, dass** die Lamelle (5, 6) bei ringförmiger Ausbildung zum Auftragen des Klebemittels im Auftragbereich des Auftragkopfes (7) um ihre Achse (17) gedreht und/oder der Auftragkopf (7) um die Achse (17) der Lamelle (5, 6) bewegt wird oder die Lamelle (18) bei nicht ringförmiger Ausbildung als Ringabschnitt ausgebildet ist und mittels einer um ihre zentrale Achse (22) drehbaren Matrize (21) um diese Achse (22) in den Auftragbereich des Auftragkopfes (7) transportiert wird,
wobei bei nicht ringförmiger Ausbildung
a) die Lamelle (18) in einer ersten Position (20) aus einen Blechband (19) gestanzt wird,
b) die Lamelle (18) in eine zweite Position (24) neben dem Blechband (19) transportiert wird, in der das Klebemittel aufgebracht wird,
c) anschließend die Lamelle (18) in eine dritte Position (25) unterhalb des Blechbandes (19) transportiert wird,
d) aus dem Blechband (19) in Höhe der dritten Position (25) eine nächste Lamelle (18) gestanzt wird, die in der dritten Position (25) auf die mit Klebemittel versehen Lamelle (18) unter Druck aufgelegt wird,
e) das so entstandene Teilpaket in eine vierte Position (26) neben dem Blechband (19) transportiert wird, in der auf das Teilpaket das Klebemittel aufgebracht wird,
f) anschließend das Teilpaket in die erste Position (20) transportiert wird, in der die nächste Lamelle (18) gestanzt und unter Druck auf das darunter liegende Teilpaket aufgelegt wird,
g) anschließend die Verfahrensschritte a bis f wiederholt werden, bis das Lamellenpaket die gewünschte Höhe aufweist,
h) die Lamellenpakete zu Teilringpaketen gestapelt werden, die anschließend zu ringförmigen Paketen zusammengefügt werden,
und dass bei ringförmiger Ausbildung die Lamelle (5, 6) und/oder der Auftragkopf (7) um die Achse (17) oder bei nicht ringförmiger Ausbildung die Lamelle (18) um die zentrale Achse (22) über einen definierten produktabhängigen Drehwinkel bewegt wird.

2. Verfahren nach Anspruch 1,
**dadurch gekennzeichnet, dass** bei ringförmiger Ausbildung die Lamelle (5, 6) und/oder der Auftragkopf (7) geregelt und gesteuert gedreht bzw. im Raum bewegt werden.

3. Verfahren nach einem der Ansprüche 1 oder 2,
**dadurch gekennzeichnet, dass** der Auftragkopf (7) über einen definierten produktabhängigen Drehwinkel um die Achse (17) der ringförmigen Lamelle (5, 6) bewegt wird und vorteilhaft einen feststehenden und einen beweglichen Teil (27) aufweist, von denen der bewegliche Teil (27) über einen definierten produktabhängigen Drehwinkel um die Achse (17) der ringförmigen Lamelle (5,6) bewegt wird.

4. Verfahren nach einem der Ansprüche 1 bis 3,
**dadurch gekennzeichnet, dass** die ringförmige Lamelle (5, 6) vor dem Klebemittelauftrag gereinigt und/oder aktiviert wird,

5. Verfahren nach einem der Ansprüche 1 bis 4,
**dadurch gekennzeichnet, dass** das Klebemittel vor oder nach dem Ausstanzen der ringförmigen Lamelle (5, 6) aufgebracht wird.

6. Verfahren nach einem der Ansprüche 1 bis 5,
**dadurch gekennzeichnet, dass** die Lamelle (18) vor dem Klebemittelauftrag gereinigt und/oder aktiviert wird.

7. Verfahren nach einem der Ansprüche 1 bis 6,
**dadurch gekennzeichnet, dass** das Klebemittel berührungslos, vorteilhaft flächig, punkt- oder linienförmig auf die Lamelle (5, 6, 18) aufgebracht wird.

8. Verfahren nach einem der Ansprüche 1 bis 7,
**dadurch gekennzeichnet, dass** das Klebemittel in einer solchen Menge aufgebracht wird, dass die Fläche des Klebemittels auf der Oberseite der Lamelle (5, 6, 18) wenigstens etwa 50 %, vorzugsweise größer etwa 60 % der gesamten Fläche der Lamellenoberseite beträgt.

9. Verfahren nach einem der Ansprüche 1 bis 8,
**dadurch gekennzeichnet, dass** die nicht ringförmige Lamelle (18) T-förmig ausgebildet ist und vorteilhaft mittels einer drehbaren Matrize (21) zwischen den verschiedenen Positionen (20, 24 bis 26) transportiert wird.

10. Verfahren nach einem der Ansprüche 1 bis 9,
**dadurch gekennzeichnet, dass** die nicht ringförmige Lamelle (18) um einen definierten produktspezifischen Drehwinkel zwischen den einzelnen Positionen (20, 24 bis 26) transportiert wird.

11. Anlage zur Durchführung des Verfahrens nach einem der Ansprüche 1 bis 10, mit mindestens einem Stanzwerkzeug (4), mit dem aus einem Blechmaterial Lamellen (5, 6, 18) gestanzt werden,
wobei dem Stanzwerkzeug (4) wenigstens eine Station (4a, 8, 9) zum Auftrag eines Klebemittels auf die Lamellen (5, 6, 18) und zum Reinigen und/oder zum Aktivieren nachgeschaltet ist, und dass die Station zum Auftrag des Klebemittels wenigstens einen Auftragkopf (7) aufweist, der wenigstens mit einer Auftragdüse (16) versehen ist .

12. Anlage nach Anspruch 11,
**dadurch gekennzeichnet, dass** die Lamellen (5, 6, 18) im Bereich außerhalb des Stanzwerkzeuges (4) zu Lamellenpaketen gestapelt werden.

13. Anlage nach Anspruch 11 oder 12,
**dadurch gekennzeichnet, dass** die Station (4a, 8, 9) zum Auftrag des Klebemittels und zur Reinigung und/oder zur Aktivierung wenigstens eine Auftragvorrichtung (7) aufweist, die im Bereich einer Dreheinheit (33, 36) für die Lamellen (5, 6) vorgesehen ist, mit der die Lamellen um ihre Achse drehbar sind.

14. Anlage nach Anspruch 11 oder 12,
**dadurch gekennzeichnet, dass** die Station (4a, 8, 9) zum Auftrag des Klebemittels und zur Reinigung und/oder zur Aktivierung wenigstens eine Auftragvorrichtung (7) aufweist, die längs der Lamellen (5, 6) bewegbar ist.

## Claims

1. A method for manufacturing lamellae packets for a rotor or stator, in which at least one adhesive is applied to lamellae (5, 6, 18) with at least one application head (7), and the lamellae (5, 6, 18) provided with the adhesive are stacked into a lamellae packet, **characterized in that** the lamella (5, 6) in an annular design is turned around its axis (17) for applying the adhesive in the application area of the application head (7) and/or the application head (7) is moved around the axis (17) of the lamella (5, 6) or the lamella (18) in a non-annular design is designed as a ring section and transported by a matrix (21) rotatable around its central axis (22) around this axis (22) and into the application area of the application head (7),
wherein in a non-annular design,
a) the lamella (18) is stamped out of a sheet metal band (19) in a first position (20),
b) the lamella (18) is transported into a second position (24) next to the sheet metal band (19), in which the adhesive is applied,
c) after which the lamella (18) is transported into a third position (25) below the sheet metal band (19),
d) a next lamella (18) is stamped out of the sheet metal band (19) at the height of the third position (25), and placed on the lamella (18) provided with adhesive in the third position (25) under pressure,
e) the partial packet obtained in this way is then transported into a fourth position (26) next to the sheet metal band (19), in which the adhesive is applied to the partial packet,
f) the partial packet is then transported into the first position (20), in which the next lamella (18) is punched and placed on the partial packet lying below it under pressure,
g) the procedural steps a to f are then repeated until the lamella packet has the desired height,
h) the lamella packets are stacked into partial ring packets, which are then assembled into ring-shaped packets,
and that the lamella (5, 6) and/or the application head (7) are moved around the axis (17), if the lamella (5,6) has an annular design, or the lamella (18) is moved around the central axis (22) at a defined product-dependent angle of rotation, if the lamella has a non-annular design.

2. The method according to claim 1,
**characterized in that** the ring-shaped lamella (5, 6) and/or the application head (7) are turned or moved in space in a regulated and controlled manner.

3. The method according to one of claims 1 or 2,
**characterized in that** the application head (7) is moved over a defined product-dependent angle of rotation around the axis (17) of the ring-shaped lamella (5, 6), and advantageously has a fixed and a movable part (27), of which the movable part (27) is moved around the axis (17) of the ring-shaped lamella (5, 6) at a defined, product-dependent angle of rotation.

4. The method according to one of claims 1 to 3,
**characterized in that** the ring-shaped lamella (5, 6) is cleaned and/or activated before applying the adhesive.

5. The method according to one of claims 1 to 4,
**characterized in that** the adhesive is applied before or after stamping out the ring-shaped lamella (5, 6).

6. The method according to one of claims 1 to 5,
**characterized in that** the lamella (18) is cleaned and/or activated before the adhesive is applied.

7. The method according to one of claims 1 to 6,
**characterized in that** the adhesive is applied to the lamella (5, 6, 18) without contact, advantageously flat, in dots or in lines.

8. The method according to one of claims 1 to 7,
**characterized in that** the adhesive is applied in a quantity where the surface of the adhesive on the upper side of the lamella (5, 6, 18) measures at least about 50%, preferably more than about 60% of the entire surface of the upper side of the lamella.

9. The method according to one of claims 1 to 8,
**characterized in that** the lamella (18) in a non-annular design is T-shaped in design, and advantageously transported by means of a rotatable matrix (21) between the various positions (20, 24 to 26).

10. The method according to one of claims 1 to 9,
**characterized in that** the lamella (18) in a non-annular design is transported between the individual positions (20, 24 to 26) by a defined product-specific angle of rotation.

11. A system for implementing the method according to one of claims 1 to 10, with at least one punching tool (4), with which lamellae (5, 6, 18) are punched out a sheet metal material,
wherein at least one station (4a, 8, 9) for applying an adhesive to the lamellae (5, 6, 18) and for cleaning and/or activation is connected downstream from the punching tool (4), and that the punching for applying the adhesive has at least one application head (7), which is at least provided with an application nozzle (16).

12. The system according to claim 11,
**characterized in that** the lamellae (5, 6, 18) are stacked into lamella packets in the area outside of the punching tool (4).

13. The system according to claim 11 or 12,
**characterized in that** the station (4a, 8, 9) for applying the adhesive and for cleaning and/or for activation has at least one application device (7), which is provided in the area of a turning device (33, 36) for the lamellae (5, 6), with which the lamellae can be rotated around their axis.

14. The system according to claim 11 or 12,
**characterized in that** the station (4a, 8, 9) for applying the adhesive and for cleaning and/or for activation has at least one application device (7), which can be moved along the lamellae (5, 6).

## Revendications

1. Procédé de fabrication de paquets de lamelles pour un rotor ou un stator, dans lequel au moins un adhésif est déposé sur des lamelles (5, 6, 18) á l'aide d'au moins une tête d'application (7) et les lamelles (5, 6, 18) pourvues de l'adhésif sont empilées en un paquet de lamelles, **caractérisé en ce que** dans le cas d'une conception annulaire, pour appliquer l'adhésif, la lamelle (5, 6) est tournée autour de son axe (17) dans la région d'application de la tête d'application (7) et/ou la tête d'application (7) est déplacée autour de l'axe (17) de la lamelle (5, 6), ou bien, dans le cas d'une conception non annulaire, la lamelle (18) est conçue comme un segment d'anneau et transportée, au moyen d'une matrice (21) apte à tourner autour de son axe central (22), vers la région d'application de la tête d'application (7), autour de cet axe (22),
dans lequel, dans le cas d'une conception non annulaire,
a) la lamelle (18) est découpée à partir d'une bande de tôle (19) à une première position (20),
b) la lamelle (18) est transportée vers une deuxième position (24) à côté de la bande de tôle (19), où l'adhésif est déposé,
c) la lamelle (18) est ensuite transportée vers une troisième position (25) sous la bande de tôle (19),
d) une lamelle (18) suivante est découpée à partir de la bande de tôle (19) à la hauteur de la troisième position (25), et posée sous pression sur la lamelle (18) pourvue de l'adhésif à la troisième position (25),
e) le paquet partiel ainsi obtenu est transporté vers une quatrième position (26) à côté de la bande de tôle (19), où l'adhésif est déposé sur le paquet partiel,
f) dans lequel le paquet partiel est ensuite transporté vers la première position (20), où la lamelle (18) suivante est découpée et disposée sous pression sur le paquet partiel se trouvant dessous,
g) dans lequel les étapes de procédé a à f sont ensuite répétées jusqu'à ce que le paquet de lamelles présente la hauteur souhaitée,
h) dans lequel les paquets de lamelles sont empilés en paquets annulaires partiels, lesquels sont ensuite assemblés en paquets annulaires,
et **en ce que** la lamelle (5, 6) et/ou la tête d'application (7) est/sont déplacée(s) autour de l'axe (17) dans le cas d'une conception annulaire, ou la lamelle (18) est déplacée autour de l'axe central (22) selon un angle de rotation défini dépendant du produit dans le cas d'une conception non annulaire.

2. Procédé selon la revendication 1,
**caractérisé en ce que** la lamelle annulaire (5, 6) et/ou la tête d'application (7) est/sont réglée(s) et tournée(s) de façon contrôlée ou déplacée(s) dans l'espace.

3. Procédé selon l'une des revendications 1 ou 2,
**caractérisé en ce que** la tête d'application (7) est déplacée sur un angle de rotation défini dépendant du produit autour de l'axe (17) de la lamelle annulaire (5, 6) et présente avantageusement une partie fixe et une partie mobile (27), parmi lesquelles la partie mobile (27) est déplacée sur un angle de rotation défini dépendant du produit autour de l'axe (17) de la lamelle annulaire (5, 6).

4. Procédé selon l'une des revendications 1 à 3,
**caractérisé en ce que** la lamelle annulaire (5, 6) est nettoyée et/ou activée avant l'application d'adhésif.

5. Procédé selon l'une des revendications 1 à 4,
**caractérisé en ce que** l'adhésif est appliquée avant ou après le découpage de la lamelle annulaire (5, 6).

6. Procédé selon l'une des revendications 1 à 5,
**caractérisé en ce que** la lamelle (18) est nettoyée et/ou activée avant l'application d'adhésif.

7. Procédé selon l'une des revendications 1 à 6,
**caractérisé en ce que** l'adhésif est déposé sur la lamelle (5, 6, 18) sans contact, avantageusement de manière surfacique, par points ou en lignes.

8. Procédé selon l'une des revendications 1 à 7,
**caractérisé en ce que** l'adhésif est déposé dans une quantité telle que sur le côte de la lamelle (5, 6, 18), la surface de l'adhésif représente au moins environ 50 %, de préférence plus d'environ 60 %, de la surface totale de la face supérieure de lamelle.

9. Procédé selon l'une des revendications 1 à 8,
**caractérisé en ce que** la lamelle non annulaire (18) est conçue en forme de T et transportée avantageusement au moyen d'une matrice rotative (21) entre les différentes positions (20, 24 à 26).

10. Procédé selon l'une des revendications 1 à 9,
**caractérisé en ce que** la lamelle non annulaire (18) est transportée autour d'un angle de rotation défini dépendant du produit entre les différentes positions (20, 24 à 26).

11. Installation destinée à la mise en œuvre du procédé selon l'une des revendications 1 à 10, comprenant au moins un outil de découpe (4) avec lequel des lamelles (5, 6, 18) sont découpées dans un matériau de tôle,
dans laquelle l'outil de découpe (4) est suivi d'au moins une station (4a, 8, 9) pour l'application d'un adhésif sur les lamelles (5, 6, 18) et pour le nettoyage et/ou à l'activation, et en ce que la station pour l'application de l'adhésif présente au moins une tête d'application (7), laquelle est au moins une buse d'application (16).

12. Installation selon la revendication 11,
**caractérisé en ce que** les lamelles (5, 6, 18) sont empilées en paquets de lamelles dans la région extérieure á l'outil de découpe (4).

13. Installation selon la revendication 11 ou 12,
**caractérisée en ce que** la station (4a, 8, 9) pour l'application de l'adhésif et pour le nettoyage et/ou pour l'activation présente au moins un dispositif d'application (7), disposé dans la région d'une unité rotative (33, 36) pour les lamelles (5, 6), avec laquelle les lamelles peuvent tourner autour de leur axe.

14. Installation selon la revendication 11 ou 12,
**caractérisé en ce que** la station (4a, 8, 9) pour l'application de l'adhésif et pour le nettoyage et/ou pour l'activation présente au moins un dispositif d'application (7), lequel est déplaçable le long des lamelles (5, 6).
